(19) Europäisches Patentamt / European Patent Office / Office européen des brevets

(11) **EP 4 601 035 A1**

(12) # EUROPEAN PATENT APPLICATION
published in accordance with Art. 153(4) EPC

(43) Date of publication:
**13.08.2025 Bulletin 2025/33**

(21) Application number: **24830141.8**

(22) Date of filing: **30.04.2024**

(51) International Patent Classification (IPC):
$H01M\ 4/38$ [(2006.01)]     $H01M\ 4/134$ [(2010.01)]
$H01M\ 10/052$ [(2010.01)]     $H01M\ 4/62$ [(2006.01)]

(52) Cooperative Patent Classification (CPC):
**H01M 4/48; C01B 33/02; H01M 4/0428;**
**H01M 4/134; H01M 4/366; H01M 4/386;**
**H01M 4/587; H01M 10/0525;** C01P 2004/61;
C01P 2004/80; C01P 2006/11; C01P 2006/12;
C01P 2006/40; H01M 2004/021; H01M 2004/027;
(Cont.)

(86) International application number:
**PCT/CN2024/090962**

(87) International publication number:
**WO 2025/001493 (02.01.2025 Gazette 2025/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.06.2023 CN 202310809643**

(71) Applicants:
• **BTR New Material Group Co., Ltd.**
**Shenzhen, Guangdong 518106 (CN)**
• **Dingyuan New Energy Technology Co., Ltd.**
**Huizhou, Guangdong 516227 (CN)**

(72) Inventors:
• **XIE, Wei**
**Shenzhen, Guangdong 518106 (CN)**
• **PANG, Chunlei**
**Shenzhen, Guangdong 518106 (CN)**
• **DENG, Zhiqiang**
**Shenzhen, Guangdong 518106 (CN)**
• **REN, Jianguo**
**Shenzhen, Guangdong 518106 (CN)**
• **HE, Xueqin**
**Shenzhen, Guangdong 518106 (CN)**

(74) Representative: **Müller Schupfner & Partner**
**Patent- und Rechtsanwaltspartnerschaft mbB**
**(Muc)**
**Bavariaring 11**
**80336 München (DE)**

(54) **NEGATIVE ELECTRODE MATERIAL AND PREPARATION METHOD THEREFOR, AND LITHIUM-ION BATTERY**

(57) An anode material, a preparation method thereof, and a lithium ion battery provided, relating to the technical field of lithium ion battery. The anode material includes a core and a coating layer formed on at least part of surface of the core, the core includes a silicon-based material, and the anode material has pore structure, where the pore structure has a differential ratio

$$\Delta\Phi = \frac{\Delta S \times s}{\Delta P \times Q_{max}}$$

satisfying $1\times10^{-3}\leq\Delta\Phi\leq0.5$,
where $\Delta S$ is an area of a hysteresis loop in isothermal adsorption and desorption curve of the anode material; s is a specific surface area of the anode material; $\Delta P$ is an interval difference of a relative pressure P/Po corresponding to the hysteresis loop, where $0\leq\Delta P\leq1$; and $Q_{max}$ is a maximum isothermal adsorption quantity of the anode material. The preparation method of the anode material includes: performing chemical vapor deposition a silicon-based material core to be coated for coating, to obtain an anode material with pore structure. By forming a pore structure with certain complexity on the anode material, rate performance and cycle performance of the material are improved.

FIG. 1

(52) Cooperative Patent Classification (CPC): (Cont.)
    Y02E 60/10

**Description**

**CROSS-REFERENCE OF RELATED APPLICATIONS**

This application claims the benefit of priority to Chinese Patent Application No. CN202310809643X entitled "ANODE MATERIAL, PREPARATION METHOD THEREOF, AND LITHIUM ION BATTERY" filed on June 30, 2023, the entire content of which is incorporated herein by reference.

**TECHNICAL FIELD**

The present disclosure relates to the technical field of lithium battery, in particular to an anode material, a preparation method thereof, and a lithium ion battery.

**BACKGROUND**

At present, a graphite material is often used in a mature commercial lithium ion battery as a battery anode material. However, theoretical lithium storage capacity of the graphite material is low, which may not meet needs of people for a high energy density battery. While, a silicon-based anode material has a very high theoretical capacity, about 4200 mAh/g, which is much higher than the capacity of commercial graphite. Therefore, the silicon-based anode material has a great application prospect in energy storage, and is one of the most critical material for a high energy density lithium-ion battery.

However, existing silicon-based anode material has problems such as large expansion, poor rate performance, etc., which seriously affect wide application of the silicon-based anode material in lithium battery. Thus, how to inhibit expansion and improve cycle and rate performances of the silicon-based material is a premise that the silicon-based anode material may be widely used. Therefore, it is an urgent problem to be overcame currently by developing an anode material capable of inhibiting expansion, and improving rate performance and cycle performance, by designing particle structure of the silicon-based anode material.

**SUMMARY**

The present disclosure provides an anode material, including a core and a coating layer formed on at least part of surface of the core, the core includes a silicon-based material, and the anode material has pore structure.

$$\Delta\Phi = \frac{\Delta S \times s}{\Delta P \times Q_{max}}$$

The pore structure has a differential ratio satisfying $1\times10^{-3} \leq \Phi \leq 0.5$;

where $\Delta S$ is an area of a hysteresis loop in isothermal adsorption and desorption curve of the anode material;
s is a specific surface area of the anode material;
$\Delta P$ is an interval difference of a relative pressure P/Po corresponding to the hysteresis loop, where $0 < \Delta P < 1$; and
$Q_{max}$ is a maximum isothermal adsorption quantity of the anode material.

In some embodiments, the silicon-based material includes at least one of elemental silicon, silicon oxide, silicon carbide, silicon nitride, silicon phosphide, silicon sulfide, and silicon alloy.

In some embodiments, the coating layer includes at least one of a carbon-containing material and a ceramic-based material.

In some embodiments, the coating layer has a mass accounting 0.5% to 10% of a total mass of the anode material.

In some embodiments, the coating layer has a thickness of 20 nm to 700 nm.

In some embodiments, the core further includes a carbon-based material.

In some embodiments, the core further includes a doping metal element.

In some embodiments, the pore structure has a differential ratio $\Delta\Phi$ satisfying $5\times10^{-3} \leq \Delta\Phi \leq 0.5$.

In some embodiments, the hysteresis loop has an area $\Delta S$ satisfying $4.5\times10^{-4} \leq \Delta S \leq 3.0\times10^{-2}$. In some embodiments, the hysteresis loop has an area $\Delta S$ satisfying $4.5\times10^{-4} \leq \Delta S \leq 2.5\times10^{-2}$.

In some embodiments, the anode material has a specific surface area s of 0.5 m$^2$/g to 15 m$^2$/g.

In some embodiments, the anode material has a maximum isothermal adsorption quantity $Q_{max}$ of $\leq 1.35$ mmol/g.

In some embodiments, the anode material has a BJH average pore size of 5 nm to 20 nm, and a BJH pore volume satisfying $1.0\times10^{-4}$ cm$^3$/g$\leq V_{BJH}\leq$0.1 cm$^3$/g.

In some embodiments, the anode material has a pH value of 6.0 to 12.0.

In some embodiments, the carbon-containing material includes at least one of graphite, hard carbon, soft carbon, diamond-like carbon, carbon fiber, carbide, asphalt, and resin-based polymer.

In some embodiments, the ceramic-based material includes at least one of phosphate, silicate, nitride, and metal oxide.

In some embodiments, the carbon-based material includes at least one of soft carbon, hard carbon, graphite, graphene, carbon nanotube, carbon fiber, and diamond-like carbon.

In some embodiments, the doping metal element includes at least one of Li, Mg, Al, Ti, Na, K, Ca, Be, La, Ce, V, and Ba.

In some embodiments, the doping metal element accounts a mass percentage of 2% to 15% in the anode material.

In some embodiments, the coating layer has the pore structure.

In some embodiments, the pore structure includes micropore, mesopore, and macropore.

The present disclosure further provides a preparation method of a silicon-based anode material, including: performing chemical vapor deposition (CVD) a silicon-based material core to be coated for coating, to obtain an anode material with pore structure.

A gas for the vapor deposition includes an auxiliary gas and a carbon source gas, where in the gas, the carbon source gas accounts a volume proportion of 30% to 95%, and the auxiliary gas accounts a volume proportion of 5% to 70%.

In some embodiments, before the CVD, the method further includes: pretreating the silicon-based material core to be coated.

In some embodiments, the vapor deposition has a temperature of 400°C to 1200°C, and a duration of 1 h to 12 h.

In some embodiments, during the CVD, the method further includes: placing the silicon-based material core to be coated in a deposition chamber of a deposition furnace, where the deposition chamber has a rotation speed of 0.1 r/min to 10 r/min, and the deposition furnace has a pressure of 0.1 MPa to 10 MPa therein.

In some embodiments, the carbon source gas includes at least one of methane, ethane, ethylene, acetylene, propane, formaldehyde, acetaldehyde, and methanol.

In some embodiments, the auxiliary gas includes at least one of $H_2$, $SO_2$, $NH_3$, and Ar.

In some embodiments, the pretreating includes: sieving, grading, cleaning, and drying sequentially.

In some embodiments, a silicon-based material core to be coated obtained after the pretreating has a particle size $D_{50}$ of 2.5 μm to 9.0 μm.

In some embodiments, a silicon-based material core to be coated obtained after the pretreating has a specific surface area of 0.5 m$^2$/g to 7.5 m$^2$/g.

In some embodiments, the cleaning includes: washing with water, and then with an organic solvent.

In some embodiments, the drying includes: air-drying cleaned material with an inert gas, and vacuum drying at 60°C to 150°C and below 1000 Pa.

In some embodiments, after the vapor deposition, the method further includes: grading and drying a product obtained by the vapor deposition.

The present disclosure further provides a lithium ion battery, including the anode material described above, or including an anode material prepared by the preparation method described above.

## BRIEF DESCRIPTION OF DRAWINGS

In order to more clearly illustrate the technical solutions of embodiments of the present disclosure, the accompanying drawings used in the embodiments will be briefly described below, and it should be understood that the following drawings only show some embodiments of the present disclosure, and therefore should not be considered as limiting the scope of the present disclosure.

FIG. 1 is an isothermal adsorption and desorption curve of the anode material prepared by Example 1; and
FIG. 2 is an isothermal adsorption and desorption curve of the anode material prepared by Comparative Example 1.

## DESCRIPTION OF EMBODIMENTS

As used herein:
"prepared by" is synonymous with "including". As used herein, the terms "comprising," "including," "having," "containing," or any other variation thereof, are intended to cover non-exclusive inclusion. For example, compositions, steps, methods, articles, or devices comprising the listed elements need not be limited to only those elements, but may include other elements not explicitly listed or elements inherent to such compositions, steps, methods, articles, or devices. The conjunction "consisting of" excludes any unpointed element, step, or component.

When equivalents, concentrations, or other values or parameters are represented as ranges defined by a range, an optional range, or a series of upper and lower selectable values, this should be understood to specifically disclose all ranges formed by any pairing of any upper range limit or optional value with any lower range limit or optional value, regardless of whether the ranges are separately disclosed. For example, when the range "1 to 5" is disclosed, the described ranges should be interpreted to include the ranges "1 to 4", "1 to 3", "1 to 2", "1 to 2 and 4 to 5", "1 to 3 and 5", etc. When a numerical range is described herein, the range is intended to include its end values and all integers and fractions within the range unless otherwise stated.

In these embodiments, the parts and percentages are by mass unless otherwise indicated.

"parts by mass" refers to a basic measurement unit representing a mass proportional relationship of a plurality of components, and 1 parts may represent any unit mass, for example, may represent 1g, or may represent 2.689g, etc. If we say that the mass part of component A is a part, and the mass part of component B is b part, it represents the ratio a: b of the mass of component A. Alternatively, it represents that the mass of the component A is aK, and the mass of the component B is bK (K is any number and represents a multiple factor). It may not be misinterpreted that, unlike the parts by mass, the sum of the parts by mass of all components is not limited to 100 parts.

"and/or" is used to indicate that one or both of the illustrated situations may occur, e.g., A and/or B include (A and B) and (A or B).

Although a silicon-based anode material has a high energy density, there is a phenomenon of excessive volume expansion during charging and discharging, resulting in problems such as poor cycle and rate performances. The inventor of the present disclosure designed particle structure of the anode material for improving performances of the material, and found by studies that the pore structure in the silicon-based anode material plays a key role.

In most studies, only ranges of specific surface area and pore size of an anode material are defined, and there is no deep research involving the relationship between pore size, pore shape, pore structure and electrochemical performance, let alone any further improvement. Pores on surface of an anode material serve as a fast channel for lithium transport, a expansion space for core, and a skeleton space for SEI deposition, facilitating to relieve expansion of core, improve cycle and rate performances of the anode material serving as a battery material, stabilize interface of SEI-active component, improve cycle Coulombic efficiency of the anode material serving as a battery material, and reduce loss of active silicon and lithium. Based on this, the inventors of the present disclosure have deeply studied pore structure of the silicon-based anode material, especially of the coating layer.

Not doubtedly, different pore structures have different effects on cycle performance and rate performance of an anode material. However, since pores present in an anode material have a relatively small pore diameter and a large pore number, and the pores have complex specific configuration, it is difficult to clearly describe the pore structure in words. For an anode material, pore size, pore distribution, and specific surface area of the material influence adsorption performance of the material, thereby showing different isothermal adsorption and desorption curves. The inventors of the present disclosure found by studies on an anode material that differences of pore structures are reflected by comprehensively analyzing related parameters of the isothermal desorption curve and the specific surface area. Based on this, the inventor of the present disclosure further improved the anode material to obtain an anode material with special pore structure.

Suitable pore distribution and pore structure in a silicon-based anode material facilitates rapid infiltration of electrolyte. This rapid infiltration improves rapid transport of lithium ion, shortens lithium ion transport path, and improves lithium ion transport efficiency, thereby improving rate performance of the silicon-based anode material. In addition, a coating layer in the above silicon-based anode material also effectively isolates co-embedding of organic small molecules in electrolyte, reduces loss of core material, and improves cycle performance.

The present disclosure provides an anode material, a preparation method thereof, and a lithium ion battery. By arranging an anode material with a special pore structure, on one hand, unnecessary exposure of silicon-based material core is isolated, loss of an active material and lithium is reduced, and cycle performance is improved; and on the other hand, the pore structure facilitates rapid infiltration of electrolyte, the transport efficiency of lithium ions is improved, and thus rate performance of the material is improved.

An embodiment of the present disclosure provides an anode material, including a core and a coating layer formed on at least part of surface of the core, the core includes a silicon-based material, and the anode material has pore structure.

$$\Delta\Phi = \frac{\Delta S \times s}{\Delta P \times Q_{max}}$$

The pore structure has a differential ratio $\qquad$ satisfying $1 \times 10^{-3} \leq \Delta\Phi \leq 0.5$, for example, $\Delta\Phi$ may be $5 \times 10^{-3}$ to 0.45, 0.015 to 0.4, 0.03 to 0.3, or 0.1 to 0.2, such as 0.001, 0.003, 0.005, 0.008, 0.01, 0.03, 0.05, 0.08, 0.1, 0.3, 0.5, etc., or an arbitrary value between 0.001 to 0.5, or a range between two arbitrary values. In some embodiments, $\Delta\Phi$ satisfies: $5 \times 10^{-3} \leq \Delta\Phi \leq 0.5$.

Specifically, $\Delta S$ is an area of a hysteresis loop in isothermal adsorption and desorption curve of the anode material, where $\Delta S$ is the area of the hysteresis loop calculated by an integral method; s is a specific surface area of the anode material, where s has a value that is a specific value in unit $m^2/g$; $\Delta P$ is an interval difference of a relative pressure P/Po corresponding to the hysteresis loop, where $0 < \Delta P \leq 1$, for example, if in the isothermal adsorption and desorption curve, the relative pressure P/Po corresponding to the hysteresis loop is within 0.6 to 0.9, then $\Delta P = 0.9 - 0.6 = 0.3$, or if the relative pressure P/Po corresponding to the hysteresis loop is within 0.53 to 0.76, then $\Delta P = 0.76 - 0.53 = 0.23$; and $Q_{max}$ is a maximum isothermal adsorption quantity of the anode material, where it has a value that is a specific value in unit mmol/g.

It should be noted that, according to the GB/T 21650.3-2011 standard, the anode material is tested by a mercury compression method and a gas adsorption method. Specifically, an anode material sample to be tested is accurately weighed and placed in a sample tube, vacuum degassed to reach the required vacuum degree in whole system, then the sample tube is immersed in a liquid nitrogen bath, fed with a known amount of gas (nitrogen), the sample adsorbs the gas and causes pressure reduction, the gas is measured for equilibrium pressure after reaching adsorption equilibrium, and the adsorption amount is calculated according to the system pressure change before and after adsorption. The system is added the adsorbate gas gradually for changing pressure, and the above operation is repeated to test an isothermal adsorption and desorption curve. The specific surface area, pore volume, pore size distribution, etc. of the sample to be tested are calculated equivalently depending on a theoretical model. For the area of the hysteresis loop, it is mainly obtained by respectively integrating adsorption curve and desorption curve in the isothermal adsorption and desorption curve and then preforming subtraction between their data.

By studying rule of the adsorption curve, the inventor of the present disclosure found that data curve characteristic of the hysteresis loop in the isothermal adsorption and desorption curve of the anode material has a great correlation with the electrochemical performance. By considering comprehensively data such as hysteresis loop area and its corresponding relative pressure interval difference value, and specific surface area and maximum isothermal adsorption quantity of the anode material, and combining them into a calculation formula, so that a differential ratio $\Delta \Phi$ of the pore structure is obtained, for describing the pore structure in the anode material. The contribution of the pore structure is converted into an equivalent ratio, which is expressed in a more intuitive form, so as to determine efficiency of solid-liquid interface for substance and charge transporting, thus indicating influence of the pore structure of the anode material, especially of the coating layer, on electrochemical performance.

Generally, pores have different pore sizes and distribution states. In the present disclosure, complexity of the pore structure of the anode material is reflected by $\Delta \Phi$. The smaller $\Delta \Phi$ is, shown that the pore structure more tends to uniform, with the same pore size and uniform distribution, and less interlacing among different pores, while the larger $\Delta \Phi$ is, shown that the difference among different pore sizes tends to be larger, the pores interlace with each other, and have higher chaos degree. In the present disclosure, if $\Delta \Phi$ is less than $1 \times 10^{-3}$, indicating that the pores have small differentiation and simple pore structure, that is, the pores have uniform size and shape, and different pore structures are less interlaced or combined with each other. Thus, under the same specific surface area, the anode material with these pore structures has low efficiency for inhibiting and buffering expansion, poor stability in SEI interface, and low cycle performance, especially cycle Coulombic efficiency; while, if $\Delta \Phi$ is greater than 0.5, indicating that the pore structure has a high complexity, too many pores with different pore sizes are combined with each other, with high substance transport resistance, low substance transport efficiency, and poor rate, and meanwhile, concentration polarization during electrochemical reaction process is exacerbated. Therefore, within the range of $1 \times 10^{-3} \leq \Delta \Phi \leq 0.5$, indicating that the pore structure of the anode material has a proper pore size and interlaced distribution, which ensure that the anode material rapidly transport substance and charge, while also has sufficient pores for buffering expansion of the core, stabilizing SEI interface, and improving Coulombic efficiency.

With reference to the first aspect, in some embodiments, the silicon-based material in the anode material of the present disclosure includes at least one of elemental silicon, silicon oxide, silicon carbide, silicon nitride, silicon phosphide, silicon sulfide, and silicon alloy. In some embodiments, the silicon oxide is a silicon oxide composite, which is represented by a general formula SiOx, where $0 < x \leq 2$. In some embodiments, a molar ratio of oxygen atom and silicon atom in the silicon oxide is (0.5 to 2): 1.

In addition to the silicon-based material, the core further includes at least one of a carbon-based material and a doping metal element. When a doping metal element is present in the core including the silicon-based material, optionally, the doping metal element is at least partially present in a silicate form.

For a doped anode material, for example, a core composed of a doping metal element combined with elemental silicon, or a core composed of a silicate combined with silicon oxide, when it has the pore structure characteristics of the present disclosure, $\Delta \Phi$ is closer to a center value within the range, thereby effectively improving electrochemical rate performance, and improving cycle capacity retention.

In some embodiments, the carbon-based material includes at least one of soft carbon, hard carbon, graphite, graphene, carbon nanotube, carbon fiber, and diamond-like carbon.

In some embodiments, the doping metal element includes at least one of Li, Mg, Al, Ti, Na, K, Ca, Be, La, Ce, V, and Ba.

In some embodiments, the doping metal element accounts a doping mass percentage of 2% to 15% in the anode material, for example, it may be 3% to 14%, 4% to 12%, or 5% to 10%, etc., such as 2%, 3%, 5%, 8%, 10%, 12%, 15%, etc, or an arbitrary value between 2% to 15%, or a range between two arbitrary values.

In some embodiments, the coating layer in the anode material of the present disclosure includes at least one of a carbon-containing material and a ceramic-based material.

In some embodiments, the carbon-containing material includes at least one of graphite, hard carbon, soft carbon, diamond-like carbon, carbon fiber, carbide, asphalt, and resin-based polymer.

In some embodiments, the ceramic-based material includes at least one of phosphate, silicate, nitride, and metal oxide.

In some embodiments, the coating layer has a mass accounting 0.5% to 10% of a total mass of the anode material, for example, it may be 1% to 9%, 2% to 8%, or 3% to 7%, etc., such as 0.5%, 1%, 3%, 5%, 7%, 10%, etc., or an arbitrary value between 0.5% to 10%, or a range between two arbitrary values. In some embodiments, the coating layer has a mass accounting 2.5% to 8% of a total mass of the anode material.

In some embodiments, the coating layer has a thickness of 20 nm to 700 nm, for example, it may be 50 nm to 600 nm, 90 nm to 550 nm, or 150 nm to 400 nm, etc., such as 20 nm, 50 nm, 100 nm, 200 nm, 300 nm, 500 nm, 700 nm, etc., or an arbitrary value between 20 nm to 700 nm, or a range between two arbitrary values.

In some embodiments, the pore structure of the anode material has a differential ratio $\Delta\Phi$ satisfying $5\times10^{-3}\leq\Delta\Phi\leq0.5$.

In some embodiments, there is a hysteresis loop in the isothermal suction and desorption curve of the anode material, and the hysteresis loop has an area $\Delta S$ satisfying $4.5\times10^{-4}\leq\Delta S\leq3.0\times10^{-2}$, for example, $\Delta S$ may be $4.5\times10^{-4}\leq\Delta S\leq2.7\times10^{-2}$, $4.5\times10^{-4}\leq\Delta S\leq2.5\times10^{-2}$, $4.5\times10^{-3}\leq\Delta S\leq1.5\times10^{-2}$, etc., such as 0.00045, 0.0005, 0.001, 0.005, 0.01, 0.02, 0.025, 0.027, 0.03, etc., or an arbitrary value between 0.00045 and 0.025, or a range between two arbitrary values. In some embodiments, $\Delta S$ satisfies $4.5\times10^{-4}\leq\Delta S\leq1.0\times10^{-2}$.

In some embodiments, the anode material has a specific surface area s of 0.5 m$^2$/g to 15 m$^2$/g, for example, it may be 1.0 m$^2$/g to 12 m$^2$/g, 2.5 m$^2$/g to 10 m$^2$/g, or 5.0 m$^2$/g to 7 m$^2$/g, etc., such as 0.5 m$^2$/g, 1 m$^2$/g, 3 m$^2$/g, 5 m$^2$/g, 8 m$^2$/g, 10 m$^2$/g, 12 m$^2$/g, 15 m$^2$/g, etc., or an arbitrary value between 0.5 m$^2$/g to 15 m$^2$/g, or a range between two arbitrary values. In some embodiments, the s is 0.5 m$^2$/g to 10 m$^2$/g.

In some embodiments, the anode material has a maximum isothermal adsorption quantity $Q_{max}$ of <1.35 mmol/g, for example, it may be $Q_{max}$ <1.0 mmol/g, $Q_{max}$ <0.45 mmol/g, $Q_{max}\leq0.35$ mmol/g, etc., such as 0.1 mmol/g, 0.3 mmo/g, 0.5 mmol/g, 0.8 mmol/g, 1.0 mmol/g, 1.2 mmol/g, or 1.35 mmol/g, etc.

In some embodiments, the anode material has a BJH average pore size of 5 nm to 20 nm, for example, it may be 7 nm to 18 nm, 9 nm to 16 nm, or 10 nm to 14 nm, etc., such as 5 nm, 10 nm, 15 nm, 20 nm, etc., or an arbitrary value between 5 nm to 20 nm, or a range between two arbitrary values.

The BJH pore volume of the anode material, also known as BJH adsorption cumulative volume of pores, satisfies $1.0\times10^{-4}$ cm$^3$/g$\leq V_{BJH}\leq0.1$ cm$^3$/g, for example, it may be $5.0\times10^{-4}$ cm$^3$/g to 0.05cm$^3$/g, $8\times10^{-4}$ cm$^3$/g to 0.01 cm$^3$/g, or 0.008 cm$^3$/g to 0.05 cm$^3$/g, etc., such as 0.0001 cm$^3$/g, 0.0005 cm$^3$/g, 0.001 cm$^3$/g, 0.005 cm$^3$/g, 0.1 cm$^3$/g, etc., or an arbitrary value between $1.0\times10^{-4}$ cm$^3$/g to 0.1 cm$^3$/g, or a range between two arbitrary values.

In some embodiments, the anode material has a pH value of 6.0 to 12.0, for example, it may be 7.0 to 11.0, 7.5 to 10.0, or 8.0 to 9.0, etc., such as 6.0, 6.5, 7.0, 8.0, 9.0, 10.0, 11.0, 12.0, etc., or an arbitrary value between 6.0 to 12.0, or a range between two arbitrary values.

In some embodiments, the anode material has micropore, mesopore, and macropore In some embodiments, the pore structure is mainly mesopore. In some embodiments, the mesopore accounts a pore volume proportion of 65% to 90%. In some embodiments, the macropore accounts a pore volume proportion of 5% to 20%. In some embodiments, the micropore accounts a pore volume proportion of 0.05% to 10%. If the anode material meets the above ranges, when a battery including the anode material conducts electrochemical charging and discharging, in the anode material, diffusion interface and diffusion path of lithium ions and electrolyte degradation reach equilibrium, so as to show better electrochemical rate, as well as to reduce consumption of electrolyte, reduce SEI excessive deposition, inhibit expansion of plate, and improve cycle performance.

An embodiment of the present disclosure further provides a preparation method of the anode material, including: performing chemical vapor deposition (CVD) a silicon-based material core to be coated, to obtain an anode material with pore structure. A gas for the vapor deposition includes a mixed gas containing an auxiliary gas and a carbon source gas. In the mixed gas, the carbon source gas accounts a volume proportion of 30% to 95%, and the auxiliary gas accounts a volume proportion of 5% to 70%.

In some embodiments, before the CVD, the method further includes: pretreating the silicon-based material core to be coated.

In some embodiments, the pretreating includes: sieving, grading, cleaning and drying sequentially.

In some embodiments, the cleaning includes: washing with water, and then with an organic solvent; and the drying includes: air-drying cleaned material with an inert gas, and vacuum drying at 60°C to 150°C and below 1000 Pa.

In some embodiments, the pretreating includes: vibrationally sieving the silicon-based material core to be coated, adjusting and controlling an appropriate particle size (an optional range of $D_{50}$ is 2.5 $\mu$m to 9.0 $\mu$m) by grading; washing with deionized water for 30 min and then with ethanol for 30 min, and finally purging with argon for drying. Further vacuum drying the purge-dried material, under a vacuum environment kept below 1000 Pa, at a drying temperature of 60°C to 150°C, for a drying duration of any value between 3 h to 48 h.

It should be noted that, by adjusting and controlling particle size of the silicon-based material core to be coated involving in the pretreating, then specific surface area of the silicon-based material core raw material is effectively controlled (an optional range of the specific surface area is 0.5 m$^2$/g to 7.5 m$^2$/g), which has a certain control effect on formation of the pore structure after deposition.

In addition, the cleaning method by washing with water and alcohol cleans adsorbates on surface of the core, reducing influence of the adsorbents on the deposition, enabling the coating layer to form tight chemical bond deposition with the core, thus facilitating rapid transport of charge, and improving conductivity of the material. Moreover, the surface adsorbate has a certain influence on deposition structure of the coating layer, increasing an uncertainty for forming the anode material, thereby affecting performance of the material.

In some embodiments, the CVD has a temperature of 400°C to 1200°C, for example, it may be 500°C to 1100°C, 600°C to 1000 °C, or 700°C to 900°C, etc., such as 400°C, 600°C, 800°C, 1000°C, 1200°C, etc., or an arbitrary between 400°C to 1200°C, etc. In some embodiments, the CVD has a duration of 1 h to 12 h, for example, it may be 2 h to 11 h, 3 h to 10 h, or 4 h to 9 h, etc., such as 1 h, 3 h, 5 h, 7 h, 10 h, 12 h, etc., or an arbitrary value between 1 h to 12 h, or a range between two arbitrary values.

In some embodiments, during the CVD, the method further includes: placing the silicon-based material core to be coated in a deposition chamber of a deposition furnace, where the deposition chamber has a rotation speed of 0.1 r/min to 10 r/min, and the deposition furnace has a pressure of 0.1 MPa to 10 MPa therein.

It should be noted that the temperature of the CVD adjusts deposition efficiency, the pressure in the furnace controls compactness of the coating layer, the deposition duration controls thickness of the coating layer, and the rotation of the deposition chamber improves uniformity among deposition coating on particles.

In some embodiments, the carbon source gas for the CVD includes at least one of methane, ethane, ethylene, acetylene, propane, formaldehyde, acetaldehyde, and methanol.

In some embodiments, the CVD adopts at least two different carbon source gases. Because the different carbon source gases have different dissociation temperature and dissociation efficiency, causing differential deposition. A coating layer with a complex pore structure combination is deposited by the differential deposition due to different gas sources.

In some embodiments, the auxiliary gas for the CVD includes at least one of $H_2$, $CO_2$, $NH_3$, and Ar.

In some embodiments, in the mixed gas, the carbon source gas accounts a volume proportion of 30% to 95%, and the auxiliary gas accounts a volume proportion of 5% to 70%. For example, the carbon source gas accounts a volume proportion of 30%, and the auxiliary gas accounts a volume proportion of 70%; or the carbon source gas accounts a volume proportion of 50%, and the auxiliary gas accounts a volume proportion of 50%; or the carbon source gas accounts a volume proportion of 80%, and the auxiliary gas accounts a volume proportion of 20%; or the carbon source gas accounts a volume proportion of 95%, and the auxiliary gas accounts a volume proportion of 5%.

It should be noted that, by introducing carbon source gas and auxiliary gas in different ratios, the coating layer have more amorphous irregular branches locally, so that organic part (high hydrogen content carbon) and coating layer parts (elemental carbon part, such as graphite, diamond, graphene, etc.) in the coating layer have higher uniformity, which further increases complexity of the pore structure in the anode material and changes the pore structure, thereby changing the differential ratio of the pore structure and changing electrochemical performance.

In some embodiments, after the CVD, the mothed further includes: grading and drying obtained product, and packaging, to form a finished anode material.

In some embodiments, the anode material of the present disclosure is obtained by performing liquid phase coating or solid phase coating on the silicon-based material core to be coated.

In some embodiments, the liquid phase coating includes: dissolving a coating raw material in a solvent, and mixing with a silicon-based material core to be coated, to obtain a precursor solution; and evaporating the precursor solution, and performing first heat treatment in inert gas, to obtain an anode material.

In some embodiments, if the coating layer is a ceramic material, the coating raw material used for the liquid phase coating includes at least one of soluble silicate, phosphate, and metal salt, and the solvent used is water.

In some embodiments, if the coating layer is a carbon-containing material, the coating raw material used for the liquid phase coating includes at least one of asphalt and a resin-based polymer organic compound, and the solvent used includes at least one of n-hexane, benzene, and toluene.

It should be noted that dissolving various materials such as asphalt, polymer monomer, etc. in an organic solvent, due to their complex crosslinking polymerization and differential deposition effect, facilitates to form a complex pore structure. As for adding a soluble mixed organic monomer in a polar solvent, it may be form a polymer at a certain pH, and then the precursor is prepared and deposited.

In some embodiments of the liquid phase coating, the coating raw material has a mass accounting 0.5% to 10% of a total mass of the coating raw material and the silicon-based material core to be coated, for example, it may be 1% to 9%, 2% to 7%, or 3% to 6%, etc., such as 0.5%, 1%, 3%, 5%, 8%, 10%, or an arbitrary value between 0.5% to 10%, or a range between two arbitrary values. This is to ensure that the coating raw material is uniformly deposited on surface of the silicon-based material core.

In some embodiments, a mass ratio of the solvent and the silicon-based material core to be coated is (3 to 7.5): 1, for example, it may be 3:1, 4:1, 5:1, 6:1, 7:1, 7.5:1, or an arbitrary value between (3 to 7.5): 1, or a range between two arbitrary values.

During evaporating the precursor solution, the method includes: placing the precursor solution in a water bath or an oil bath for heating and evaporating, while stirring at a speed of 10 r/min to 500 r/min. Both the water bath or the oil bath have a temperature of 10°C to 20°C below boiling point of their solvents. For example, when the solvent is water, the water bath has a temperature set in 80°C to 90°C. The stirring is continued until particles are completely dried, and shown in powder again.

After performing first heat treatment on evaporated material in inert gas, performing a solid phase reaction on the precursor to form silicate, in which certain carbon-containing material is carbonized to form a coating layer, improving conductivity of the anode material. In some embodiments, the precursor forms a ceramic coating layer by the solid phase reaction, because precursor material is uniformly deposited on surface of the active core by coprecipitation and sol-gel method, uniformly mixing various components, thus reducing reaction temperature, and improving reaction efficiency and ceramic body forming efficiency.

In some embodiments of the liquid phase coating, the first heat treatment has a temperature of 500°C to 1200°C, for example, it may be 600°C to 1100°C, 700°C to 1000°C, or 800°C to 900°C, such as 500°C, 600°C, 800°C, 1000°C, 1200°C, or an arbitrary value between 500°C to 1200°C, or a range between two arbitrary values. In some embodiments, the first heat treatment has a duration of 3 h to 24 h, for example, it may be 5 h to 20 h, 8 h to 18 h, or 10 h to 15 h, such as 3 h, 5 h, 10 h, 15 h, 20 h, 24 h, or an arbitrary value between 3 h to 24 h, or a range between two arbitrary values. The inert gas used includes at least one of argon, nitrogen, and helium.

In some embodiments, when a solid phase coating process is adopted, the method includes: solid phase mixing a solid coating material and a silicon-based material core to be coated, to obtain a solid phase precursor; and performing second heat treatment on the solid phase precursor in inert gas, to obtain an anode material.

The solid coating material includes at least one of solid asphalt, soft carbon, hard carbon, and a ceramic precursor material. Due to a carbon structure difference among these coating materials, after uniformly mixing by a ball milling, all the materials are fully combined and uniformly deposited on surface of the silicon-based material core, reducing reaction temperature, facilitating combination of pore structures in various structures during subsequent sintering, and forming a better internal structure. In some embodiments, the ball milling has a duration of 6 h to 72 h.

In some embodiments of the solid phase coating, the second heat treatment has a temperature of 500°C to 1200°C., for example, it may be 600°C to 1100°C, 700°C to 1000°C, or 800°C to 900°C, such as 500°C, 600°C, 800°C, 1000°C, 1200°C, or an arbitrary value between 500°C to 1200°C, or a range between two arbitrary values. In some embodiments, the second heat treatment has a duration of 3 h to 24 h, for example, it may be 5 h to 20 h, 8 h to 18 h, or 10 h to 15 h, such as 3 h, 5 h, 10 h, 15 h, 20 h, 24 h, or an arbitrary value between 3 h to 24 h.

After the liquid phase coating or the solid phase coating, the method further includes: etching prepared product and washing with water. In some embodiments, after acid-base etching, water washing, and suction filtrating, purging with argon for drying, and then grading a product dried by argon and vacuum drying, and vacuum packaging after moisture is removed, to form a finished anode material.

It should be noted that, by acid-base etching, water washing, and grading the product prepared by the liquid phase coating or the solid phase coating, soluble precursor in the product which is not completely reacted is removed, thereby further improving the pore structure in the product. Grading the product water washed and blow-dried breaks up agglomeration of powder, and meanwhile, further controls graded anode material in an optimized particle size range. In addition, since the anode material with the pore structure easily adsorbs moisture, the moisture is further removed by vacuum drying, thereby improving electrochemical performance of the anode material.

In the present disclosure, by regulating and controlling the coating layer, the pores of the anode material, especially the coating layer with special characteristic pore structure, are controlled, effectively relieving expansion of the anode core, balancing stability of SEI growth interface, improving cycle Coulombic efficiency, and ensuring the anode material to show performance.

Then present disclosure provides an anode material with a coating layer, and the anode material has a pore structure. It is found by studies that the pore structure has a great influence on electrochemical performance of the anode material, so that the pore structure of the anode material was studied in detail. By studying rule of the adsorption curve, it is found that data curve characteristic of the hysteresis loop in the isothermal adsorption and desorption curve of the anode material has a great correlation with the electrochemical performance, and has an optional mathematical relationship range (the differentiation ratio $\Delta\Phi$ of the pore structure). Within the range of $1\times10^{-3}\leq\Delta\Phi\leq0.5$, indicating that the pore structure of the anode material has a proper pore size and interlaced distribution, which ensure that the anode material rapidly transport substance and charge, while also has sufficient pores for buffering expansion of the core, stabilizing SEI interface, and improving Coulombic efficiency. If $\Delta\Phi$ is less than $1\times10^{-3}$, indicating that the pores have small differentiation and simple pore structure, that is, the pores have uniform size and shape, and different pore structures are less interlaced or combined with each other. Thus, under the same specific surface area, the anode material with these pore structures has low efficiency for inhibiting and buffering expansion, poor stability in SEI interface, and low cycle performance, especially cycle Coulombic efficiency; while, if $\Delta\Phi$ is greater than 0.5, indicating that the pore structure has a high complexity, too many pores with different pore sizes are combined with each other, with high substance transport resistance, low substance transport efficiency, and poor rate, and meanwhile, concentration polarization during electrochemical reaction process is exacerbated.

In the anode material preparation method provided by the present disclosure, the anode material with the pore structure is prepared by chemical vapor deposition (CVD). By introducing the auxiliary gas into the carbon source gas, the pore structure in the coating layer and the pore structure between the coating layer and the core are regulated, further increasing complexity of the pore structure in the coating layer. By changing the pore structure, the differential ratio of the pore structure is changed, and electrochemical performance of the anode material is changed.

In lithium ion battery provided by the present disclosure, the above anode material is adopted. By utilizing an appropriate pore structure in the coating layer, the anode material rapidly transport substance and charge, pores of the coating layer also buffer expansion of the anode material, stabilizing SEI interface, and greatly reducing deposition thickness of SEI layer, thus greatly improving diffusion coefficient of lithium in the anode material core, and improving Coulombic efficiency and rate performance of the battery.

## Examples

The embodiments of the present disclosure will be described in detail below with reference to specific examples, but those skilled in the art will understand that the following examples are only used to illustrate the present disclosure and should not be regarded as limiting the scope of the present disclosure. If specific conditions are not indicated in the Examples, it shall be carried out in accordance with the conventional conditions or the conditions recommended by the manufacturer. The reagents or instruments used are conventional products commercially available from manufacturers.

## Example 1

This example provided an anode material, and a preparation method thereof including:

(1) 1000 g of lithium-doped silicon monoxide was weighed, with a mass proportion of lithium accounting 10% and a silicon/oxygen atom ratio of 1:(0.9 to 1.1), washed with deionized water for 30 min and with ethanol for 30 min, purged with dry Ar until no obvious liquid was present and no adhesion or agglomeration among particles was present, and then placed in a vacuum drying oven, and heated for drying after the pressure in the oven was reduced to 500 Pa, with a drying temperature of 100°C and a drying duration of 24 h;

(2) the treated sample was placed in a vapor deposition furnace for coating, with a mixed gas of methane, acetylene, and ethylene in a volume ratio of 1:1:1 selected as a coating gas, and an auxiliary atmosphere of $NH_3$ fed in a volume ratio of 1:1 of the carbon source gas and the auxiliary gas, under conditions of a deposition temperature of 900°C, a deposition duration of 5 h, a rotation speed of deposition chamber of 5 r/min, and a pressure maintained at 0.5 MPa in the deposition chamber regulated by an air pressure valve, to control obtained coating layer to account a mass proportion of (5±0.5)%; and

(3) the vapor-deposited sample was graded, sieved and adjusted to target particle size, and vacuum dried at 100°C for 24h, to form a finished anode material.

## Example 2

This example provided an anode material, and a preparation method thereof including:

(1) 1000 g of lithium-doped silicon monoxide was weighed, with a mass proportion of lithium accounting 10% and a silicon/oxygen atom ratio of 1:(0.9 to 1.1), washed with deionized water for 30 min and with ethanol for 30 min, purged with dry Ar until no obvious liquid was present and no adhesion or agglomeration among particles was present, and then placed in a vacuum drying oven, and heated for drying after the pressure in the oven was reduced to 500 Pa, with a drying temperature of 100°C and a drying duration of 24 h;

(2) the treated sample was placed in a vapor deposition furnace for coating, with a mixed gas of methane and acetylene in a volume ratio of 1:1 selected as a coating gas, and an auxiliary atmosphere of Ar fed in a volume ratio of 1:1 of the carbon source gas and the auxiliary gas, under conditions of a deposition temperature of 900°C, a deposition duration of 5 h, a rotation speed of deposition chamber of 5 r/min, and a pressure maintained at 0.3 MPa in the deposition chamber regulated by an air pressure valve, to control obtained coating layer to account a mass proportion of (5±0.5)%; and

(3) the vapor-deposited sample was graded, sieved and adjusted to target particle size, and vacuum dried at 100°C for 24h, to form a finished anode material.

**Example 3**

This example provided an anode material, and a preparation method thereof similar to that of Example 1, except that: in step (1), 1000 g of silicon monoxide was weighed, with a silicon/oxygen atom ratio of 1:(0.9 to 1.1).

**Example 4**

This example provided an anode material, and a preparation method thereof similar to that of Example 1, except that: a volume ratio of the carbon source gas and the auxiliary gas was 1:3.

**Example 5**

This example provided an anode material, and a preparation method thereof similar to that of Example 1, except that: a volume ratio of the carbon source gas and the auxiliary gas was 1:4.

**Example 6**

This example provided an anode material, and a preparation method thereof similar to that of Example 1, except that: in step (1), 1000g of magnesium aluminum-doped silicon monoxide was weighed, with a mass proportion of magnesium accounting 5%, a mass proportion of aluminum accounting 5%, and a silicon/oxygen atom ratio of 1:(0.9 to 1.1).

**Example 7**

This example provided an anode material, and a preparation method thereof including:

(1) 1000 g of silicon monoxide was weighed, with a silicon/oxygen atom ratio of 1:(0.9 to 1.1), washed with deionized water for 30 min and with ethanol for 30 min, purged with dry Ar until no obvious liquid was present and no adhesion or agglomeration among particles was present, and then placed in a vacuum drying oven, and heated for drying after the pressure in the oven was reduced to 500 Pa, with a drying temperature of 100°C and a drying duration of 24 h;

(2) the treated sample was placed in a vapor deposition furnace for coating, with methane selected as a coating gas, and an auxiliary atmosphere of $H_2$ and $SO_2$ in a volume ratio of 1:1 fed in a volume ratio of 1:2 of the carbon source gas and the auxiliary gas, under conditions of a deposition temperature of 900°C, a deposition duration of 7 h, a rotation speed of deposition chamber of 5 r/min, and a pressure maintained at 1 MPa in the deposition chamber regulated by an air pressure valve, to control obtained coating layer to account a mass proportion of (5±0.5)%; and

(3) the vapor-deposited sample was graded, sieved and adjusted to target particle size, and vacuum dried at 100°C for 24h, to form a finished anode material.

**Comparative Example 1**

This comparative example provided an anode material, and a preparation method thereof including:

(1) 100 g of silicon monoxide with a silicon/oxygen atom ratio of 1:(0.9 to 1.1) was added into an organic solvent mixed by 100 g of N-methylpyrrolidone and 20 g of polyimide, stirred for 30 min, vacuum dried at a drying temperature of 100°C for 48 h to remove the solvent;

(2) the mixed precursor was transferred into a high-pressure reactor, heated to 900°C at a rate of 10°C/ min in an argon atmosphere, and reacted for 12 h; and

(3) the vapor-deposited sample was graded, sieved and adjusted to a target particle size, then the heated material was placed in a hydrochloric acid solution with a pH value of 2 for 30 min, washed with deionized water, placed in a lithium hydroxide solution with a pH value of 11 for 30 min, washed with deionized water for 30 min, further washed and suction filtrated with ethanol for 30 min, purged with dry argon until no obvious liquid was present and no adhesion or agglomeration among particles was present, and then placed in a vacuum drying oven for vacuum drying at 100°C for 24 h, to form a finished anode material.

**Comparative Example 2**

This comparative example provided an anode material, and a preparation method thereof including:

(1) 100 g of lithium-doped silicon monoxide was weighed, with a mass proportion of lithium accounting 10% and a silicon/oxygen atom ratio of 1:(0.9 to 1.1), washed with deionized water for 30 min and with ethanol for 30 min, purged with dry Ar until no obvious liquid was present and no adhesion or agglomeration among particles was present, and then placed in a vacuum drying oven, and heated for drying after the pressure in the oven was reduced to 500 Pa, with a drying temperature of 100°C and a drying duration of 24 h;
(2) the treated sample was placed in a vapor deposition furnace for coating, with pure acetylene selected as a coating gas for carbon source deposition. A plasma was adopted for conducting decomposition and deposition of acetylene, with a deposition duration of 48 h, and a plasma source generated by an electron sputtering RF gun using graphite as target. The material table in the deposition chamber was provided with a bias voltage of -400V for ensuring deposition of the carbon source. After the plasma was stabilized, the pressure in the chamber was controlled by a vacuum valve to maintain at 100 Pa; and
(3) the vapor-deposited sample was graded, sieved and adjusted to target particle size, and placed in a vacuum drying oven for vacuum drying at 100°C for 24h, to form a finished anode material.

**Comparative Example 3**

This comparative example provided an anode material, and a preparation method thereof including:

(1) 100 g of magnesium-doped silicon monoxide was weighed, with a mass proportion of lithium accounting 8.5% and a silicon/oxygen atom ratio of 1:(0.9 to 1.1), washed with deionized water for 30 min and with ethanol for 30 min, purged with dry Ar until no obvious liquid was present and no adhesion or agglomeration among particles was present, and then placed in a vacuum drying oven, and heated for drying after the pressure in the oven was reduced to 500 Pa, with a drying temperature of 100°C and a drying duration of 24 h;
(2) the treated sample was placed in a vapor deposition furnace for coating, with pure acetylene selected as a coating gas for carbon source deposition. A plasma was adopted for conducting decomposition and deposition of acetylene, with a deposition duration of 48 h, and a plasma source generated by an electron sputtering RF gun using graphite as target. The material table in the deposition chamber was provided with a bias voltage of -400V for ensuring deposition of the carbon source. After the plasma was stabilized, the pressure in the chamber was controlled by a vacuum valve to maintain at 100 Pa; and
(3) the vapor-deposited sample was graded, sieved and adjusted to target particle size, and placed in a vacuum drying oven for vacuum drying at 100°C for 24h, to form a finished anode material.

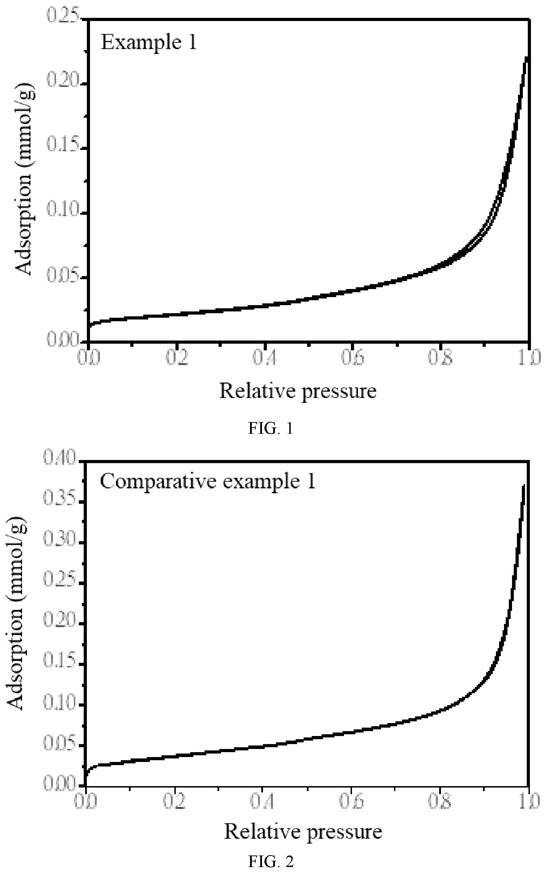

Various performance tests were performed on the anode materials of the above Examples 1-7 and Comparative Examples 1-3, the test results are shown in Table 1. Meanwhile, isothermal adsorption and desorption curves of the anode materials prepared by Example 1 and Comparative Example 1 are also respectively shown by FIG. 1 and FIG. 2.

The isothermal adsorption and desorption curve was tested according to the GB/T 21650.3-2011 standard. According to the GB/T 21650.3-2011 standard, pore size distribution and porosity of the anode material were measured by a mercury compression method and a gas adsorption method, and the isothermal adsorption and desorption curve was obtained depending on the result data.

Test for particle size: the particle size was tested according to the national standard GB/T 24533-2019, by Mastersizer 3000 of Malvern, to obtain D50 data.

Tap density: it was tested according to the method specified in the national standard GB/T 24533-2019 to obtain the data.

Test for mass proportion of the coating layer: it was tested according to the method specified in the national standard GB/T 20123-2006. For the anode material including the carbon coating layer: a sample was burned with oxygen fed in a high-temperature furnace to generate and escape $CO_2$ gas, so as to separate C element from metal elements and compounds thereof, and a carbon content in the sample was calculated by measuring content of $CO_2$. For the ceramic coating layer, a mass proportion of the ceramic coating layer was calculated by a mass proportion of the ceramic raw materials for mixing during preparing, and a mass of the finally prepared ceramic after sintering. For example, ceramic precursors A and B reacted at a high temperature to form a target ceramic D and a by-product gas E, with a reaction equation of A+B=D+E, a mass $m_D$ of D was obtained depending on the mass of added A and B, and a mass of the silicon-based raw material was $m_{Si}$, thus the mass ratio of the ceramic coating layer was obtained according to the formula $m_D/(m_{Si}+m_D)$.

Content of doped metal element lithium ICP (ppm): an anode material was burned in a muffle furnace to remove carbon, eliminated Si with hydrofluoric acid and heated, and digested with aqua regia, and performed post-treatment to obtain data according to a method specified in the national standard GB/T24533-2019.

Table 1 test results of the anode materials of Examples 1-7 and Comparative Examples 1-3.

| samples | specific surface area s ($m^2$/g) | maximum adsorption quantity $Q_{max}$ (mmol/g) | area of hysteresis loop $\Delta S$ | $\Delta P$ | $\Delta\Phi$ | particle size $D_{50}$ ($\mu$m) | tap density (g/$cm^3$) | mass proportion of coating layer | content of doped metal element lithium ICP (ppm) |
|---|---|---|---|---|---|---|---|---|---|
| Comparative Example 1 | 2.915 | 0.49 | $1.35\times10^{-4}$ | 0.89 | $9.01\times10^{-4}$ | 5.0 | 0.98 | 5.49% | / |
| Comparative Example 2 | 1.353 | 0.02 | $4.28\times10^{-3}$ | 0.51 | 0.568 | 5.0 | 0.98 | 7.92% | 83108 |
| Comparative Example 3 | 12.397 | 1.23 | $2.47\times10^{-2}$ | 0.49 | 0.51 | 5.12 | 0.99 | 5.19% | / |
| Example 1 | 2.56 | 0.22 | $1.45\times10^{-3}$ | 0.9 | 0.018 | 5.0 | 0.98 | 4.93% | 95481 |
| Example 2 | 2.32 | 0.223 | $1.90\times10^{-2}$ | 0.4 | 0.494 | 5.0 | 0.98 | 4.93% | 90212 |
| Example 3 | 2.37 | 0.23 | $9.34\times10^{-4}$ | 0.2 | 0.048 | 5.0 | 0.98 | 5.49% | / |
| Example 4 | 1.51 | 0.23 | $2.70\times10^{-2}$ | 0.6 | 0.295 | 5.0 | 0.98 | 4.97% | / |
| Example 5 | 1.531 | 0.142 | $5.17\times10^{-4}$ | 0.95 | 0.006 | 5.0 | 0.98 | 5.49% | / |
| Example 6 | 3.229 | 0.19 | $2.55\times10^{-3}$ | 0.94 | 0.046 | 5.0 | 0.98 | 5.72% | / |
| Example 7 | 1.89 | 0.18 | $1.25\times10^{-3}$ | 0.4 | 0.033 | 5.0 | 0.98 | 5.11% | / |

Electrochemical performance tests were also performed on the anode materials of Examples 1-7 and Comparative Examples 1-3. The specific test results are shown in Table 2.

The manufacturing process of the battery samples was as follows: a specific capacity and an initial charging and discharging Coulombic efficiency of the anode material were tested depending on equipment and method of BTRTC/ZY/01-020 "Button Battery Method Operation Guide Book". A button battery was assembled, where counter electrode adopted metal lithium sheet, separator was a PP-PE-PP composite membrane with a diameter of 19.2 mm; electrolyte had a component ratio of EC/EMC/DMC = 1:1:1, and a concentration of lithium salt (LiPF6) of 1.05 mol/L.

Electrochemical Performance Test:

Test for material capacity: a button battery charging and discharging device was used for charging at 0.1C constant current to 10 mV, and at 0.02C constant current to 5mV, and discharging at 0.1C constant current to 1.5V to cut-off.

Test for half-cell after 50 cycles: a button battery charging and discharging device was used for discharging at 0.1C to 0.01V, decreased discharging equidistantly at 0.01C to 0.005V, and charging at 0.1C to 1.5V, in the first cycle; discharging at 0.2C to 0.01V, decreased discharging equidistantly at 0.02C to 0.01V, discharging at 0.02C to 0.005V, and charging at 0.2C to 1.5V, in the second cycle; discharging at 0.5C to 0.01V, decreased discharging equidistantly at 0.05C to 0.01V, discharging at 0.05C to 0.005V, and charging at 0.5C to 1.5V, in the third cycle; discharging at 1C to 0.01V, decreased discharging equidistantly at 0.1C to 0.01V, discharging at 0.1C to 0.005V, and charging at 1C to 1.5V, in the fourth to the 50th cycles; and discharging at 0.1C to 0.01V, decreased discharging equidistantly at 0.01C to 0.01V, and discharging at 0.01C to 0.005V, in the 51st cycle.

Test for full cell performance: the anode material was mixed with graphite, so as to have a capacity reached the standard 450 mAh/g. A capacity retention at 0.2C was tested after standing at high temperature (60°C) for 7 days (2.75V to 4.2V).

Table 2 test results of the electrochemical performance of the anode materials of Examples 1-7 and Comparative Examples 1-3

| samples | capacity mAh/g | initial efficiency | capacity retention of button battery after 50 cycles | expansion rate of plate of button battery after cycling | capacity retention at high temperature (60°C) after 7 days | capacity retention at rate 1C/0.5C | capacity retention at rate 2C/0.5C | capacity retention at rate 3C/0.5C |
|---|---|---|---|---|---|---|---|---|
| Comparative Example 1 | 1569.6 | 76.3% | 81.28% | 36.22% | 94.57% | 83.29% | 58.41% | 29.72% |
| Comparative Example 2 | 1357.2 | 92.1% | 80.33% | 35.29% | 95.33% | 84.82% | 68.81% | 53.92% |
| Comparative Example 3 | 1352.9 | 83.2% | 80.29% | 35.17% | 94.12% | 83.18% | 65.39% | 49.29% |
| Example 1 | 1419.7 | 92.3% | 88.11% | 32.39% | 97.19% | 88.31% | 74.48% | 59.67% |
| Example 2 | 1402.1 | 91.2% | 86.54% | 33.40% | 96.39% | 86.92% | 73.95% | 54.42% |
| Example 3 | 1349.2 | 86.7% | 86.76% | 33.18% | 96.92% | 89.73% | 74.91% | 55.40% |
| Example 4 | 1411.3 | 92.1% | 86.88% | 33.19% | 96.30% | 87.00% | 74.02% | 55.19% |
| Example 5 | 1323.7 | 85.1% | 85.17% | 34.66% | 96.03% | 86.27% | 73.23% | 54.89% |
| Example 6 | 1382.0 | 88.5% | 87.41% | 31.87% | 97.43% | 89.96% | 75.71% | 59.22% |
| Example 7 | 1585.5 | 77.1% | 90.09% | 32.52% | 96.47% | 85.10% | 69.50% | 54.20% |

It should be noted that the adsorption equilibrium curve and the hysteresis loop area are numerical representations of pore structure distribution of surface, and affect electrochemical properties of the material. Through the corresponding synthesis technology for finely adjusting pore structure, the performance of the material is improved. In addition, different cores also have certain influence on the material.

From Table 2, it is known that: Comparative Example 1 coated material with a single carbon source, its pore structure varied relatively uniformly, and its hysteresis loop area was relatively small, outside the optimal range. This results in an expansion and enlargement of the plate, which because the pore structure was simple, facilitating electrolyte infiltration, but surface side reaction was not controlled. In Example 7, by mixing an auxiliary gas in the carbon source gas, the pore structure in the carbon layer and the pore structure between the carbon layers during carbon deposition are regulated, then forming different pore structures and pore distributions in the coating layer, increasing the hysteresis loop area, which facilitates to relieve expansion of the silicon-based material core, and stabilize SEI growth interface. Compared with Comparative Example 1, expansion rate of button battery plate of Example 6 is significantly reduced, and their corresponding cycle capacity retention are also different. With reference to the test results of Comparative Example 1 and Example 7 in Table 1, it shows that the differential ratio $\Delta\Phi$ of the pore structure describes electrochemical change caused by the pore structure of the anode material. If $\Delta\Phi$ is within a suitable range, electrolyte infiltration of a complex pore structure is improved, and transfer of active lithium of electrolyte in the anode material is improved, thereby improving rate performance. The complex pore structure provides a weak polarization transmission barrier for heat conduction of lithium ions, which facilitates to limiting degradation reaction at high temperature, and improve capacity retention at high-temperature storage.

In the preparation methods of the anode materials in Example 1 and Comparative Example 2, the same lithiated core was used, but different coating processes were used to adjust and control the pore structure of coating layer on surface. Thus, the difference ratios $\Delta\Phi$ of the pore structures of the prepared anode materials are different. Although the hysteresis loop area $\Delta S$ of Comparative Example 2 is within the selected range, the calculated differential ratio $\Delta\Phi$ of the pore structure exceeds the selected range, which is 0.568. With reference to the test results of electrochemical performance in Table 2, it is known that: the coating layer of the anode material prepared in Comparative Example 2 has a very complex pore structure. During charging and discharging, a lot of electrolyte degradation byproducts (SEI) are present in the pores of the coating layer on surface of the anode material, thus, the lithiated silicon-based core destroys pore structure filled with the electrolyte after volume expanding, and then torn the coating layer on surface of the anode material, causing electrolyte degradation to be out of control, reduced rate performance although the expansion rate of the anode plate is improved. The rate charging performances of Comparative Example 2 at three rates of 1C/0.5C, 2C/0.5C, and 3C/0.5C in Table 2 are reduced by 3.49%, 5.67%, and 5.75% respectively compared with the rate charging performance of Example 1.

Finally, it should be noted that: the above examples are only used to illustrate the technical solutions of the present disclosure, but not to limit the same. Although the present disclosure has been described in detail with reference to the above examples, those skilled in the art should understand that: the technical solutions described in the above examples of the present disclosure may still be modified, or some or all of the technical features may be equivalently replaced. These modifications or substitutions do not make the essence of the corresponding technical solutions depart from the scope of the technical solutions in the examples of the present disclosure.

Furthermore, those skilled in the art will appreciate that while some examples herein include certain features included in other examples rather than other features, combinations of features of different examples are meant to be within the scope of the present disclosure and form different examples. For example, any of the above-described claimed examples may be used in any combination. The information disclosed in this Background section is intended only to deepen the understanding of the general background of the disclosure and should not be taken as an admission or implying in any form that this information constitutes prior art already known to those skilled in the art.

**Industrial applicability**

An anode material, a preparation method thereof, and a lithium ion battery are provided, By arranging a coating layer with a special hole structure on the anode material, a diffusion coefficient of lithium of the anode material core is greatly improved, improving rate performance and cycle performance of the battery, and an excellent practical performance is involved.

**Claims**

1. An anode material, **characterized in that** the anode material comprises a core and a coating layer formed on at least part of surface of the core, the core comprises a silicon-based material, and the anode material has pore structure,

$$\Delta\Phi = \frac{\Delta S \times s}{\Delta P \times Q_{max}}$$

the pore structure has a differential ratio satisfying $1\times10^{-3}\leq\Delta\Phi\leq0.5$,
wherein $\Delta S$ is an area of a hysteresis loop in isothermal adsorption and desorption curve of the anode material;
s is a specific surface area of the anode material;
$\Delta P$ is an interval difference of a relative pressure P/Po corresponding to the hysteresis loop, wherein $0\leq\Delta P\leq1$; and
$Q_{max}$ is a maximum isothermal adsorption quantity of the anode material.

2. The anode material according to claim 1, **characterized in that** at least one of the following conditions is satisfied:

   a. the silicon-based material comprises at least one of elemental silicon, silicon oxide, silicon carbide, silicon nitride, silicon phosphide, silicon sulfide, and silicon alloy;
   b. the core further comprises a carbon-based material; and
   c. the core further comprises a doping metal element.

3. The anode material according to claim 1, **characterized in that** at least one of the following conditions is satisfied:

   a. the coating layer comprises at least one of a carbon-containing material and a ceramic-based material;
   b. the coating layer has a mass accounting 0.5% to 10% of a total mass of the anode material; and
   c. the coating layer has a thickness of 20 nm to 700 nm.

4. The anode material according to claim 1, **characterized in that** the pore structure has a differential ratio $\Delta\Phi$ satisfying $5\times10^{-3}\leq\Delta\Phi\leq0.5$.

5. The anode material according to claim 1, **characterized in that** the hysteresis loop has an area $\Delta S$ satisfying $4.5\times10^{-4}\leq\Delta S\leq3.0\times10^{-2}$.

6. The anode material according to claim 1, **characterized in that** the anode material has a maximum isothermal adsorption quantity $Q_{max}$ of <1.35 mmol/g.

7. The anode material according to claim 1, **characterized in that** the anode material has a BJH average pore size of 5 nm to 20 nm, and a BJH pore volume satisfying $1.0 \times 10^{-4}$ cm$^3$/g $\leq V_{BJH} \leq 0.1$ cm$^3$/g.

8. The anode material according to claim 3, **characterized in that** at least one of the following conditions is further satisfied:

> a. the carbon-containing material comprises at least one of graphite, hard carbon, soft carbon, amorphous carbon, diamond-like carbon, carbon fiber, carbide, asphalt, and resin-based polymer; and
> b. the ceramic-based material comprises at least one of phosphate, silicate, nitride, and metal oxide.

9. The anode material according to claim 1, **characterized in that** the coating layer has the pore structure.

10. The anode material according to any one of claims 1 to 9, **characterized in that** the pore structure comprises micropore, mesopore, and macropore.

11. A preparation method of an anode material, **characterized in that** the preparation method comprises:

> performing chemical vapor deposition a silicon-based material core to be coated for coating, to obtain an anode material with pore structure,
> wherein a gas for the vapor deposition comprises an auxiliary gas and a carbon source gas, wherein in the gas, the carbon source gas accounts a volume proportion of 30% to 95%, and the auxiliary gas accounts a volume proportion of 5% to 70%, and

$$\Delta\Phi = \frac{\Delta S \times s}{\Delta P \times Q_{max}}$$

> wherein in the anode material, the pore structure has a differential ratio satisfying $1 \times 10^{-3} \leq \Delta\Phi \leq 0.5$,
> wherein $\Delta S$ is an area of a hysteresis loop in isothermal adsorption and desorption curve of the anode material;
> s is a specific surface area of the anode material;
> $\Delta P$ is an interval difference of a relative pressure P/Po corresponding to the hysteresis loop, wherein $0 \leq \Delta P \leq 1$; and
> $Q_{max}$ is a maximum isothermal adsorption quantity of the anode material.

12. The preparation method according to claim 11, **characterized in that** at least one of the following conditions is satisfied:

> A. the auxiliary gas comprises at least one of $H_2$, $SO_2$, $NH_3$, and Ar;
> B. in the mixed gas, the carbon source gas accounts a volume proportion of 30% to 95%, and the auxiliary gas accounts a volume proportion of 5% to 70%.

13. The preparation method according to claim 11, **characterized in that** before the chemical vapor deposition, the method further comprises: pretreating the silicon-based material core to be coated.

14. The preparation method according to claim 13, **characterized in that** at least one of the following conditions is satisfied:

> C. the pretreating comprises: sieving, grading, cleaning, and drying the silicon-based material core to be coated sequentially;
> D. a silicon-based material core to be coated obtained after the pretreating has a particle size $D_{50}$ of 2.5 μm to 9.0 μm; and
> E. a silicon-based material core to be coated obtained after the pretreating has a specific surface area of 0.5 m$^2$/g to 7.5 m$^2$/g.

15. A lithium-ion battery, **characterized in that** the lithium-ion battery comprises the anode material according to any one of claims 1 to 10, or an anode material prepared by the preparation method according to any of claims 11 to 14.

FIG. 1

FIG. 2

## INTERNATIONAL SEARCH REPORT

| International application No. |
| --- |
| **PCT/CN2024/090962** |

| **A.** | **CLASSIFICATION OF SUBJECT MATTER** |
| --- | --- |

H01M4/38(2006.01)i; H01M4/134(2010.01)i; H01M10/052(2010.01)i; H01M4/62(2006.01)i

According to International Patent Classification (IPC) or to both national classification and IPC

| **B.** | **FIELDS SEARCHED** |
| --- | --- |

Minimum documentation searched (classification system followed by classification symbols)

IPC:H01M4/-; H01M10/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 电池, 负极, 锂, 镁铝, 掺杂, 氧化亚硅, 碳, 孔, 包覆, 核, 壳, 碳源, 甲烷, 乙炔, 乙烯, 混合气体, 氨气, 氢气, 二氧化硫, 氩气, 气相沉积, CVD, battery, cathode, Li, lithium, magnalium, carbon, coated, hole, aperture, pore, core, shell, silicon, oxide, element, doped, methane, acetylene, ethylene, mixed, gas, ammonia, hydrogen, sulfur, dioxide, argon

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 111162268 A (BTR NEW MATERIAL GROUP CO., LTD. et al.) 15 May 2020 (2020-05-15)<br>entire document | 1-15 |
| A | CN 111384380 A (SHANGHAI SHANSHAN TECH CO., LTD.) 07 July 2020 (2020-07-07)<br>entire document | 1-15 |
| A | CN 114220977 A (BEIJING IAMETAL NEW ENERGY CO., LTD.) 22 March 2022 (2022-03-22)<br>description, paragraphs 38, 53, and 101 | 1-15 |
| A | CN 114249329 A (ZHAO HONG) 29 March 2022 (2022-03-29)<br>entire document | 1-15 |
| A | CN 115959671 A (UNIVERSITY OF ELECTRONIC SCIENCE AND TECHNOLOGY OF CHINA) 14 April 2023 (2023-04-14)<br>entire document | 1-15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 July 2024** | **11 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/090962** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2022328806 A1 (SHANGHAI SHANSHAN TECH CO., LTD.) 13 October 2022 (2022-10-13)<br>    entire document | 1-15 |
| A | WO 2023051205 A1 (BTR NEW MATERIAL GROUP CO., LTD. et al.) 06 April 2023 (2023-04-06)<br>    entire document | 1-15 |

Form PCT/ISA/210 (second sheet) (July 2022)

## INTERNATIONAL SEARCH REPORT
### Information on patent family members

International application No.

**PCT/CN2024/090962**

| Patent document cited in search report | | | Publication date (day/month/year) | Patent family member(s) | | | Publication date (day/month/year) |
|---|---|---|---|---|---|---|---|
| CN | 111162268 | A | 15 May 2020 | JP | 2022533857 | A | 26 July 2022 |
| | | | | JP | 7317145 | B2 | 28 July 2023 |
| | | | | KR | 20210129691 | A | 28 October 2021 |
| | | | | US | 2022320505 | A1 | 06 October 2022 |
| | | | | EP | 3965192 | A1 | 09 March 2022 |
| | | | | EP | 3965192 | A4 | 12 October 2022 |
| | | | | WO | 2021057923 | A1 | 01 April 2021 |
| CN | 111384380 | A | 07 July 2020 | None | | | |
| CN | 114220977 | A | 22 March 2022 | None | | | |
| CN | 114249329 | A | 29 March 2022 | None | | | |
| CN | 115959671 | A | 14 April 2023 | None | | | |
| US | 2022328806 | A1 | 13 October 2022 | US | 11658292 | B2 | 23 May 2023 |
| | | | | CA | 3203562 | A1 | 08 July 2021 |
| | | | | CA | 3203562 | C | 19 March 2024 |
| | | | | WO | 2021134198 | A1 | 08 July 2021 |
| WO | 2023051205 | A1 | 06 April 2023 | EP | 4266416 | A1 | 25 October 2023 |
| | | | | KR | 20230131896 | A | 14 September 2023 |
| | | | | JP | 2024505295 | A | 05 February 2024 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310809643X